# EUROPÄISCHE PATENTSCHRIFT

(11) **EP 2 047 143 B1**
(45) Veröffentlichungstag und Bekanntmachung des Hinweises auf die Patenterteilung: **04.11.2009**
(21) Anmeldenummer: 07786920.4
(22) Anmeldetag: 29.06.2007
(51) Int. Cl.: F16H 57/04

(54) **PUMPENANTRIEB EINES AUTOMATGETRIEBES**
PUMP DRIVE OF AN AUTOMATIC TRANSMISSION
ENTRAINEMENT DE POMPE D'UNE BOITE DE VITESSES AUTOMATIQUE

(30) Priorität: 29.07.2006 DE 102006035133
(43) Veröffentlichungstag der Anmeldung: 15.04.2009
(73) Patentinhaber: ZF Friedrichshafen AG, 88038 Friedrichshafen (DE)
(72) Erfinder: LIST, Matthias, 88045 Friedrichshafen (DE)
(86) Internationale Anmeldenummer: PCT/EP2007/056539
(87) Internationale Veröffentlichungsnummer: WO 2008/015060

(56) Entgegenhaltungen:
- EP-A- 1 598 576
- WO-A-92/07204
- DE-A1- 19 859 761
- FR-A1- 2 400 646

## Beschreibung

Die Erfindung betrifft einen Pumpenantrieb eines Automatgetriebes mit einem von einem Antriebsmotor angetriebenen hydrodynamischen Drehmomentwandler und mit einer von einem Pumpenrad des Drehmomentwandlers angetriebenen Ölpumpe, gemäß dem Oberbegriff des Patentanspruchs 1.

Bekanntlich benötigen Automatgetriebe eine Ölpumpe zur Bereitstellung von Druck- und Schmiermittel einerseits zur Versorgung von hydraulisch betätigbaren Reibschaltelementen und andererseits zur Schmierung von Verzahnungen und Lagerstellen des Getriebes. So ist aus der gattungsgemäßen EP 1 598 576 A1 beispielsweise ein Automatgetriebe bekannt, dessen Getriebeeingangswelle über einen hydrodynamischen Drehmomentwandler mit einem Antriebsmotor verbunden ist, und dessen Ölpumpe von einem mit einer Kurbelwelle des Antriebsmotors verbundenen Pumpenrad des Drehmomentwandlers angetrieben wird, wobei diese Ölpumpe achsparallel zur Getriebeeingangswelle und zum Drehmomentwandler angeordnet ist und zum Antrieb der Ölpumpe ein Kettentrieb vorgesehen ist. Dabei ist vorgesehen, dass das Pumpenrad des Drehmomentwandlers mit einer Kurbelwelle des Antriebsmotor verbunden ist, dass ein Turbinenrad des Drehmomentwandlers mit der Getriebeeingangswelle verbunden ist, und dass das Pumpenrad eine üblicherweise als "Wandlerhals" bezeichnete Nabe aufweist, die über ein Gleitlager radial an einer üblicherweise als "Leitradwelle" bezeichneten getriebegehäusefesten Nabe gelagert ist, wobei die genannte Leitradwelle auch formschlüssig mit einem Leitrad des Drehmomentwandlers verbunden ist. Dabei umfasst der Kettentrieb zum Antrieb der Ölpumpe ein angetriebenes Kettenrad, welches über einen Mitnahmefinger des Wandlerhalses formschlüssig mit dem Drehmomentwandler verbunden ist, ein getriebenes Kettenrad, welches mit einer Pumpenantriebswelle verdrehfest verbunden ist, sowie eine Kette, welche die Rotation dieses angetriebenen Kettenrades auf dieses getriebene Kettenrad überträgt. Dabei ist das angetriebene Kettenrad räumlich gesehen auf der dem Antriebsmotor abgewandten Seite des Drehmomentwandlers im Bereich einer wandlerseitigen Gehäuseaußenwand des Getriebes angeordnet und über ein Gleitlager - wie der Wandlerhals des Drehmomentwandles - radial an der getriebegehäusefesten Leitradwelle des Getriebes gelagert. Die Axiallagerung des angetriebenen Kettenrades übernehmen beidseits des angetriebenen Kettenrades angeordnete Anlaufscheiben.

Der vorliegenden Erfindung liegt die Aufgabe zugrunde, einen Pumpenantrieb eines Automatgetriebes mit einem hydrodynamischen Drehmomentwandler und einer von einem Pumpenrad des Drehmomentwandler angetriebenen Ölpumpe darzustellen, dessen drehmomentseitige Anbindung an den Drehmomentwandler hinsichtlich Kosten und Montierbarkeit optimiert ist.

Erfindungsgemäß gelöst wird die Aufgabe durch einen Pumpenantrieb mit den Merkmalen des Patentanspruchs 1. Vorteilhafte Ausgestaltungen und Weiterbildungen der Erfindung ergeben sich aus den Unteransprüchen.

Demnach wird ein Pumpenantrieb eines Automatgetriebes mit einem von einem Antriebsmotor angetriebenen hydrodynamischen Drehmomentwandler und mit einer von einem Pumpenrad des Drehmomentwandlers angetriebenen Ölpumpe vorgeschlagen, bei dem das Pumpenrad des Drehmomentwandlers mit einer Wandlernabe verbunden ist, die sich ausgehend vom Pumpenrad des Drehmomentwandlers axial in zum Antriebsmotor entgegen gesetzte Richtung erstreckt, über ein Wandlernabenlager in oder an einer getriebegehäusefesten Wand radial gelagert ist und eine Pumpenantriebswelle der Ölpumpe abschnittsweise radial umschließt, wobei diese Pumpenantriebswelle radial in dieser Wandlernabe zentriert ist, und wobei diese Pumpenantriebswelle auf ihrer der dem Antriebsmotor zugewandten Seite über ein Mitnahmeprofil mit der Wandlernabe formschlüssig verbunden ist. Die "dem Antriebsmotor zugewandte Seite der Pumpenantriebswelle" kann auch als "dem Getriebe abgewandte Seite des Pumpenantriebswelle" bezeichnet bzw. angesehen sein.

Die genannte Zentrierung der Pumpenantriebswelle kann räumlich gesehen auf der Seite des Mitnahmeprofils der Pumpenantriebswelle angeordnet sein, die dem Antriebsmotor abgewandt ist. Die genannte Zentrierung der Pumpenantriebswelle kann räumlich gesehen auch auf der dem Antriebsmotor zugewandten Seite des Mitnahmeprofils der Pumpenantriebswelle angeordnet sein. Es kann aber auch vorgesehen sein, dass die Pumpenantriebswelle über ihr Mitnahmeprofil in der Wandlernabe des Drehmomentwandlers radial zentriert wird, dass also das Mitnahmeprofil der Pumpenantriebswelle gleichzeitig die Zentrierung der Pumpenantriebswelle radial in der Wandlernabe übernimmt bzw. bildet.

Vorzugsweise ist dieser erfindungsgemäße Pumpenantrieb für eine Ölpumpe vorgesehen bzw. mit einer Ölpumpe kombiniert, die nicht koaxial - also achsparallel oder winklig - zum Drehmomentwandler angeordnet ist. In diesem Fall kann die Ölpumpe des Automatgetriebes beispielsweise über einen Kettentrieb oder über einen Stirntrieb oder über einen Kegeltrieb mit dem Pumpenrad des Drehmomentwandlers verbunden sein, wobei dann die erfindungsgemäße Pumpenantriebswelle mit einem angetriebenen Kettenrad dieses Kettentriebs bzw. einem angetriebenen Stirnrad dieses Stirntriebs bzw. einem angetriebenen Kegelrad dieses Kegeltriebs verbunden ist und ein getriebenes Kettenrad dieses Kettentriebs bzw. ein getriebenes Stirnrad dieses Stirntriebs bzw. ein getriebenes Kegelrad dieses Kegeltriebs mit einer Pumpeneingangswelle oder einem Pumpenrad der Ölpumpe verbunden ist. In einer fertigungstechnisch günstigen Ausgestaltung hierzu wird vorgeschlagen, dass die Pumpenantriebswelle und das angetriebene Kettenrad bzw. angetriebene Stirnrad bzw. angetriebene Kegelrad einstückig ausgeführt sind.

Der erfindungsgemäße Pumpenantrieb kann aber auch für eine Ölpumpe vorgesehen bzw. mit einer Ölpumpe kombiniert sein, die koaxial zum Drehmomentwandler angeordnet ist. In diesem Fall ist die erfindungsgemäße Pumpenantriebswelle direkt mit einem Pumpenrad der Ölpumpe des Automatgetriebes verbunden. In einer fertigungstechnisch günstigen Ausgestaltung hierzu wird vorgeschlagen, dass die Pumpenantriebswelle und das Pumpenrad der Ölpumpe einstückig ausgeführt sind.

Der erfindungsgemäße Pumpenantrieb der Getriebeölpumpe ist hinsichtlich seiner drehmomentseitigen Anbindung an den Drehmomentwandler des Getriebes sehr kostengünstig. Das gemäß der Erfindung vorgesehene Mitnahmeprofil zur formschlüssigen Verbindung zwischen Pumpenantriebswelle und Wandlerpumpenrad bzw. Wandlernabe ist spanlos herstellbar und wesentlich billiger als eine Finger-Mitnahme auf der dem Antriebsmotor gegenüber liegenden Seite der Pumpenantriebswelle gemäß dem gattungsgemäßen Stand der Technik der EP 1 598 576 A1. Ein weiterer Vorteil der erfindungsgemäßen drehmomentseitigen Anbindung des Getriebeölpumpenantriebs an den Drehmomentwandler ist seine mechanische Robustheit bei der Montage des Drehmomentwandlers an die Getriebeeingangswelle und an die Pumpenantriebswelle. Ein weiterer wesentlicher Kostenvorteil des erfindungsgemäßen Getriebeölpumpenantriebs gegenüber dem gattungsgemäßen Stand der Technik der EP 1 598 576 A1 ergibt sich aus der Einsparung des dort notwendigen separaten Gleit- oder Wälzlagers radial zwischen Pumpenantriebswelle und Leitradwelle. Weiterhin wirkt sich die gegenüber dem gattungsgemäßen Stand der Technik der EP 1 598 576 A1 um eine Bauteiltoleranz verkleinerte Toleranzkette zwischen Wandlerpumpe und dem angetriebenen Kettenrad des Getriebeölpumpenantriebs positiv auf die Akustik im Betrieb des Automatgetriebes aus. Zudem ermöglicht die erfindungsgemäß vorgesehene Konstruktion der Radiallagerung zwischen der getriebegehäusefesten Wand und der Wandlernabe mit einem die Wandlernabe umschließenden Radiallager eine vergleichsweise einfache Ölführung in dem Radialspalt zwischen Gehäusenabe bzw. Leitradwelle und Wandlernabe.

Ein weiterer Vorteil der erfindungsgemäßen Lagerung der Pumpenantriebswelle ergibt sich speziell in Verbindung mit einer achsparallel zum Drehmomentwandler bzw. achsparallel zur Pumpenantriebswelle angeordneten Getriebeölpumpe, deren Pumpeneingangswelle über einen Kettentrieb oder einen Stirntrieb mit der Pumpenantriebswelle wirkverbunden ist: Das fest mit der Pumpenantriebswelle verbundenen angetriebene Kettenrad bzw. Stirnrad des genannten Kettentriebs bzw. Stirntriebs kann infolge der vergleichsweise großen Länge der Pumpenantriebswelle - also infolge der vergleichsweise breiten Lagerbasis des angetriebenen Ketten- bzw. Stirnrades - nicht sonderlich stark verkippen, wodurch das angetriebene Ketten- bzw. Stirnrad die Radialkräfte des Ketten- bzw. Stirntriebs gut aufnehmen kann und das System vergleichsweise unempfindlich gegen Verschleiß ist.

Ist der erfindungsgemäße Pumpenantrieb der Getriebeölpumpe kombiniert mit einer koaxial zum Drehmomentwandler bzw. koaxial zur Pumpenantriebswelle angeordnet Getriebeölpumpe, so ermöglicht die erfindungsgemäße Ausführung der drehmomentseitigen Anbindung an den Drehmomentwandler einen für diese Kombination vorteilhaften geringen Durchmesser der Wandlernabe.

Es sei noch darauf hingewiesen, dass die Bauart der Ölpumpe an sich beliebig ist. So kann eine Getriebe-Ölpumpe, die nicht koaxial zum Drehmomentwandler bzw. nicht koaxial zur erfindungsgemäßen Pumpenantriebswelle angeordnet ist, beispielsweise als kompakt bauende Flügelzellenpumpe ausgebildet sein. Als Ausführungsbeispiel für eine koaxial zum Drehmomentwandler bzw. koaxial zur erfindungsgemäßen Pumpenantriebswelle angeordneten Getriebe-Ölpumpe sei eine Innenzahnradpumpe genannt. Auch sei darauf hingewiesen, dass die Bauart des Automatgetriebes an sich beliebig ist. So kann das Automatgetriebe beispielsweise als automatisch schaltbares Stufengetriebe oder auch als stufenlos schaltbares Getriebe ausgebildet sein. Auch die konstruktive Ausführung des hydrodynamischen Drehmomentwandlers als sich ist beliebig und kann beispielsweise als so genannter Trilok-Wandler mit angetriebenem Pumpenrad und abtreibendem Turbinenrad und drehmomentabstützendem Leitrad ausgebildet sei, aber auch als einfacher so genannter Föttinger-Wandler mit angetriebenem Pumpenrad und abtreibendem Turbinenrad ohne Leitrad.

Unabhängig davon, ob die Ölpumpe des Automatgetriebes nicht koaxial oder koaxial zum Drehmomentwandler angeordnet ist, wird in einer weiteren Ausgestaltung der Erfindung vorgeschlagen, dass die Pumpenantriebswelle gegenüber der Wandlernabe mittels eines Dichtrings statisch abgedichtet ist. In diesem Fall ist dieser statisch abdichtende Dichtring in radialer Richtung gesehen zwischen Pumpenantriebswelle und Wandlernabe angeordnet und in axialer Richtung gesehen auf der dem Antriebsmotor abgewandten Seite des Mitnahmeprofils der Pumpenantriebswelle angeordnet. In Verbindung mit einer nicht koaxial zur Pumpenantriebswelle angeordneten Ölpumpe und einer Zentrierung der Pumpenantriebswelle, die axial zwischen dem Mitnahmeprofil der Pumpenantriebswelle und einem mit der Pumpenantriebswelle verbundenen angetrieben Ketten-, Stirn- oder Kegelrad beispielsweise kann der zur statischen Abdichtung zwischen Pumpenantriebswelle und Wandlernabe vorgesehene Dichtring räumlich gesehen axial zwischen Mitnahmeprofil und Zentrierung der Pumpenantriebswelle angeordnet sein, in diesem Fall vorzugsweise eingelegt in eine Radialnut der Pumpenantriebswelle.

In einer weiteren Ausgestaltung der Erfindung wird vorgeschlagen, dass die Pumpenantriebswelle gegenüber einer getriebegehäusefesten Gehäusenabe, die mit einem Leitrad des Drehmomentwandlers formschlüssig verbunden bzw. wirkverbunden ist und daher üblicherweise auch als so genannte Leitradwelle bezeichnet ist, mittels eines weiteren Dichtrings rotierend abgedichtet ist. In diesem Fall ist dieser rotierend abdichtende Dichtring in radialer Richtung gesehen zwischen Pumpenantriebswelle und Gehäusenabe angeordnet und in axialer Richtung gesehen auf der dem Antriebsmotor abgewandten Seite der Pumpenantriebswelle angeordnet. In Verbindung mit einer nicht koaxial zur Pumpenantriebswelle angeordneten Ölpumpe und einer Pumpenantriebswelle, die als angetriebenes Ketten-, Stirn- oder Kegelrad des Ölpumpenantriebs ausgebildet ist, kann der genannte Dichtring räumlich gesehen beispielsweise im Bereich zentrisch der Verzahnung dieses angetriebenen Ketten- bzw. Stirn- bzw. Kegelrades angeordnet sein.

In noch einer anderen Ausgestaltung der Erfindung wird vorgeschlagen, dass die Wandlernabe gegenüber der getriebegehäusefesten Wand mittels eines weiteren Dichtrings rotierend abgedichtet ist, wobei dieser rotierend abdichtende Dichtring in radialer Richtung gesehen zwischen Wandlernabe und Innendurchmesser einer Bohrung der getriebegehäusefesten Wand angeordnet ist und in axialer Richtung gesehen auf der Seite des Wandlernabenlagers angeordnet ist, die dem Antriebsmotor zugewandt bzw. dem Getriebe abgewandt bzw. dem Mitnahmeprofil der Pumpenantriebswelle zugewandt ist.

Im folgenden wird die Erfindung anhand eines in den Figuren dargestellten Ausführungsbeispiels näher erläutert, wobei gleiche Bauteile auch mit den gleichen Bezugszeichen versehen sind.

Es zeigen:
- Fig. 1: einen sektionalen Schnitt eines Automatgetriebes in ver- einfachter Darstellung mit einem beispielhaften Pumpenan- trieb gemäß der Erfindung und
- Fig. 2: einen Ausschnitt (Detail A) aus Fig. 1 in vergrößerter Dar- stellung.

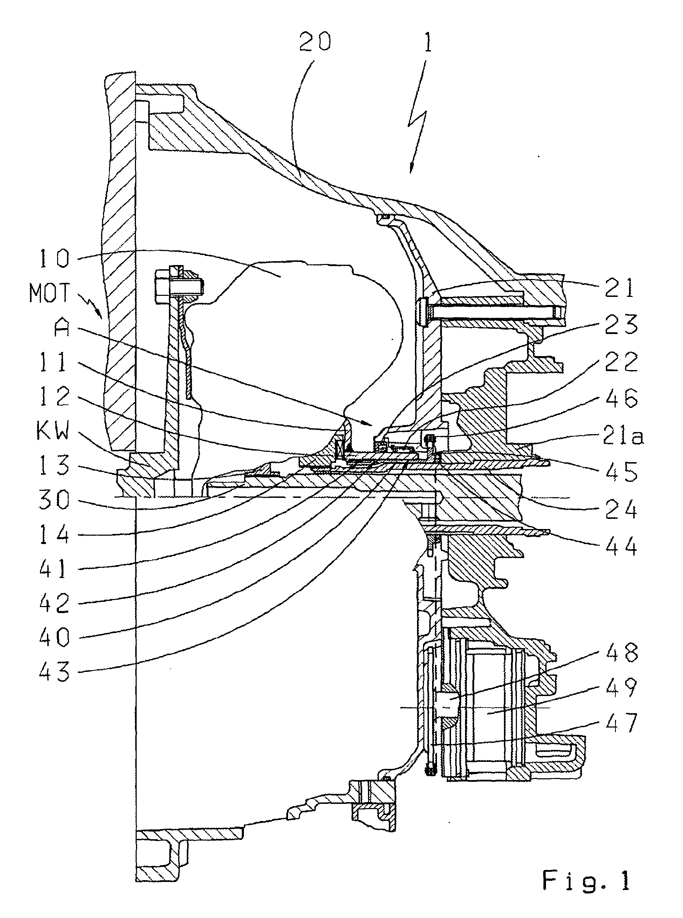

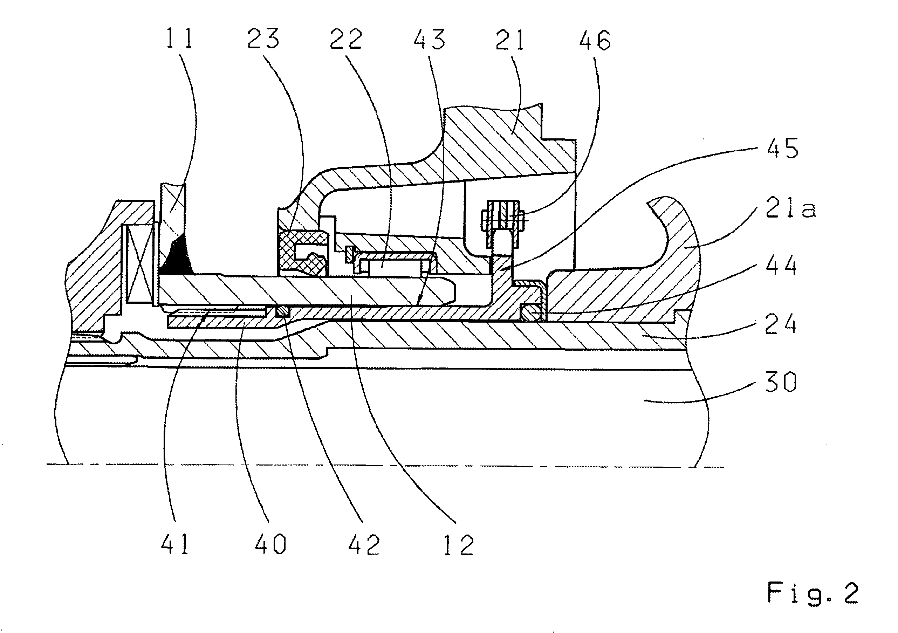

Bei dem in Fig. 1 und Fig. 2 dargestellten Ausführungsbeispiel handelt es sich um einen Pumpenantrieb eines Automatgetriebes 1 mit einem von einem Antriebsmotor MOT angetriebenen hydrodynamischen Drehmomentwandler 10 und einer von einem Pumpenrad 11 des Drehmomentwandlers 10 angetriebenen Ölpumpe 49, die achsparallel zum Drehmomentwandler 10 angeordnet ist, beispielhaft für eine konstruktive Variante eines erfindungsgemäßen Pumpenantriebs.

Ein Getriebegehäuse des Automatgetriebes 1 ist mit 20 bezeichnet, eine Getriebeeingangswelle des Automatgetriebes 1 mit 30. Der Drehmomentwandler 10 ist beispielhaft als Trilok-Wandler ausgeführt und innerhalb eines Abschnittes des Getriebegehäuses 20 angeordnet, der dem Antriebsmotor MOT des Automatgetriebes 1 zugewandt und zum Antriebsmotor MOT hin offen ist. Das Pumpenrad 11 des Drehmomentwandlers 10 bildet mit einem Wandlergehäuse eine Einheit und ist mit einer Kurbelwelle KW des Antriebsmotors MOT verbunden, wobei der Antriebsmotor MOT selbst in Fig. 1 nur vereinfacht dargestellt ist. Das Pumpenrad 11 des Drehmomentwandlers 10 überträgt Drehmoment und Drehzahl des Antriebsmotors MOT in bekannter Weise hydrodynamisch auf ein Turbinenrad 13 des Drehmomentwandlers 10 unter Verwendung eines drehmomentabstützenden Leitrades 14 des Drehmomentwandlers 10. Das Turbinenrad 13 wiederum ist mit der Getriebeeingangswelle 30 verbunden. Auf der dem Antriebsmotor MOT abgewandten Seite des Drehmomentwandlers 10 ist eine aus einem Deckel 21 und einer Zwischenplatte 21 a bestehende getriebegehäusefeste Wand des Automatgetriebes 1 angeordnet, die von der Getriebeeingangswelle 30 zentrisch durchgriffen wird und eine antriebsmotorseitige Außenwand des Getriebegehäuses 20 bildet. Die getriebegehäusefeste Zwischenplatte 21 a ist verdrehfest mit einer Gehäusenabe 24 verbunden, die sich ausgehend von der Gehäusewand 21, 21a axial in Richtung des Drehmomentwandlers 10 erstreckt und dabei die Getriebeeinganswelle 30 abschnittsweise umschließt und mit dem Leitrad 14 des Drehmomentwandlers 10 formschlüssig verbunden bzw. wirkverbunden ist. Entsprechend kann diese Gehäusenabe 24 auch als Leitradwelle bezeichnet werden, abweichend von Fig. 1 aber auch als Teil der getriebegehäusefesten Wand bzw. Zwischenplatte 21a ausgeführt sein.

Der Drehmomentwandler 10 ist radial in der getriebegehäusefesten Wand 21, 21a gelagert. Hierzu weist der Drehmomentwandler 10 eine Wandlernabe 12 auf, die fest mit dem Pumpenrad 11 des Drehmomentwandlers 10 verbunden ist und sich ausgehend von diesem Pumpenrad 11 axial in Richtung der getriebegehäusefesten Wand 21, 21 a erstreckt bis in eine zentrischen Bohrung des getriebegehäusefesten Deckels 21 hinein, in dem die Wandlernabe 12 über ein hier beispielhaft als Nadellager ausgebildetes Wandlernabenlager 22 gelagert ist. In einer anderen konstruktiven Ausgestaltung kann das Wandlernabenlager 22 beispielsweise auch als Gleitlager ausgebildet sein.

Weiterhin ist zur Abdichtung des Getriebeinnenraums nach außen vorgesehen, dass die Wandlernabe 12 gegenüber dem getriebegehäusefesten Deckel 21 a mittels eines Dichtrings 23 rotierend abgedichtet ist, der hier beispielhaft als Radial-Wellendichtring ausgebildet ist, in radialer Richtung gesehen zwischen der Wandlernabe 12 und dem Innendurchmesser einer Bohrung des getriebegehäusefesten Deckels 21 angeordnet ist und in axialer Richtung gesehen auf der Seite des Wandlernabenlagers 22 angeordnet ist, die dem Getriebe abgewandt bzw. dem Turbinenrad 13 des Drehmomentwandlers 10 und dem Antriebsmotor MOT zugewandt ist.

Die als so genannte Off-Axis-Pumpe ausgebildete Ölpumpe 49 des Automatgetriebes 1 ist in Fig. 1 nur vereinfacht dargestellt. Der Pumpenantrieb der Ölpumpe 49 weist eine Pumpenantriebswelle 40 auf, die mit dem Pumpenrad 11 des Drehmomentwandlers 10 verbunden ist, sowie eine Pumpeneingangswelle 48, die einerseits mit einem Pumpenrad der Ölpumpe 49 und andererseits über einen Kettentrieb mit der Pumpenantriebswelle 40 verbunden ist. Ein angetriebenes Kettenrad 45 dieses Kettentriebs und die Pumpenantriebswelle 40 sind hier beispielhaft einstückig ausgeführt. Räumlich gesehen erstreckt sich die Pumpenantriebswelle 40 dabei ausgehend von dem angetriebenen Kettenrad 45 axial in Richtung Pumpenrad 11 bzw. Wandlergehäuse des Drehmomentwandlers 10, überwiegend radial innerhalb der Wandlernabe 12 und axial bis in den Bereich der Schweißverbindung zwischen Wandlernabe 12 und Pumpenrad 11. Dabei umschließt die Pumpenantriebswelle 40 einen axialen Abschnitt der Gehäusenabe bzw. Leitradwelle 24. In einer hiervon anweichenden Konstruktion können Pumpenantriebswelle und angetriebenes Kettenrad auch als separate Bauteile ausgebildet sein, die dann über eine geeignete Verbindung formschlüssig oder kraftschlüssig oder stoffschlüssig miteinander verbunden sind. Ein getriebenes Kettenrad 47 des genannten Kettentriebs ist mit der Pumpeneingangswelle 48 verbunden. Zur Wirkverbindung zwischen dem angetriebenen Kettenrad 45 und dem getriebenen Kettenrad 47 ist eine Kette 46 vorgesehen. In bekannter Weise ergibt sich die Drehzahl der Pumpeneingangswelle 48 aus der Drehzahl der Pumpenantriebswelle 40 und der Übersetzung des Kettentriebs bzw. dem Verhältnis der Zähnezahlen von getriebenem und angetriebenem Kettenrad 48, 45.

Wie in Fig. 1 und Fig. 2 weiter ersichtlich, erfolgt die Verbindung zwischen Pumpenantriebswelle 40 und Pumpenrad 11 bzw. Wandlergehäuse des Drehmomentwandlers 10 formschlüssig. Hierzu weist die Pumpenantriebswelle 40 im Bereich ihres dem angetriebenen Kettenrad 45 gegenüberliegenden Endes ein Mitnahmeprofil 41 auf, welches formschlüssig in ein korrespondierendes Mitnahmeprofil der Wandlernabe 12 eingreift. In einem Bereich axial zwischen diesem Mitnahmeprofil 41 und dem angetriebenen Kettenrad 45 weist die Pumpenantriebswelle 40 eine Abschnitt auf, in dem die Pumpenantriebswelle 40 über eine Zentrierung 43 radial in der Wandlernabe 12 zentriert ist.

Wie in Fig. 1 und Fig. 2 weiter ersichtlich, ist die Pumpenantriebswelle 40 gegenüber der Wandlernabe 12 mittels eines Dichtrings 42 statisch abgedichtet, der in radialer Richtung gesehen zwischen Pumpenantriebswelle 40 und Wandlernabe 12 angeordnet ist und in axialer Richtung gesehen zwischen Zentrierung 43 und Mitnahmeprofil 41 der Pumpenantriebswelle 40 angeordnet ist. Bauart und Bauform dieses statisch abdichtenden Dichtrings 42 sind an sich beliebig, im dargestellten Ausführungsbeispiel ist der Dichtring 42 beispielhaft als handelsüblicher O-Ring ausgebildet, der beispielhaft in eine Radialnut der Pumpenantriebswelle 40 eingelegt ist.

Weiterhin ist die Pumpenantriebswelle 40 gegenüber der feststehenden Gehäusenabe bzw. Leitradwelle 24 mittels eines Dichtrings 44 rotierend abgedichtet, der in radialer Richtung gesehen zwischen Pumpenantriebswelle 40 und Gehäusenabe 24 angeordnet ist und in axialer Richtung gesehen auf der Seite der Zentrierung 43 der Pumpenantriebswelle 40 angeordnet ist, die dem Mitnahmeprofil 41 der Pumpenantriebswelle 40 abgewandt ist, hier beispielhaft in einem Bereich nahe dem angetriebenen Kettenrad 45. Bauart und Bauform dieses rotierend abdichtenden Dichtrings 44 sind an sich beliebig, im dargestellten Ausführungsbeispiel ist der Dichtring 44 beispielhaft als handelsüblicher Rechteckring ausgebildet, der beispielhaft in eine Radialnut der Pumpenantriebswelle 40 eingelegt ist.

### Bezugszeichen

- 1: Automatgetriebe
- 10: Drehmomentwandler
- 11: Pumpenrad des Drehmomentwandlers
- 11: Wandlernabe
- 13: Turbinenrad des Drehmomentwandlers
- 14: Leitrad des Drehmomentwandlers
- 20: Getriebegehäuse
- 21: getriebegehäusefeste Wand, Deckel
- 21 a: getriebegehäusefeste Wand, Zwischenplatte
- 22: Wandlernabenlager
- 23: rotierend abdichtender Dichtring
- 24: Gehäusenabe, Leitradwelle
- 30: Getriebeeingangswelle
- 40: Pumpenantriebswelle
- 41: Mitnahmeprofil der Pumpenantriebswelle
- 42: statisch abdichtender Dichtring
- 43: Zentrierung der Pumpenantriebswelle
- 44: rotierend abdichtender Dichtring
- 45: angetriebenes Kettenrad
- 46: Kette
- 47: getriebenes Kettenrad
- 48: Pumpeneingangswelle
- 49: Ölpumpe des Automatgetriebes

- MOT: Antriebsmotor
- KW: Kurbelwelle des Antriebsmotors

- A: Zeichnungsdetail der Fig. 2

## Patentansprüche

1. Pumpenantrieb eines Automatgetriebes (1) mit einem von einem Antriebsmotor (MOT) angetriebenen hydrodynamischen Drehmomentwandler (10) und mit einer von einem Pumpenrad (11) des Drehmomentwandlers (10) angetriebenen Ölpumpe (49), wobei das Pumpenrad (11) des Drehmomentwandlers (10) mit einer Wandlernabe (12) verbunden ist, die sich ausgehend vom Pumpenrad (11) des Drehmomentwandlers (10) in zum Antriebsmotor (MOT) entgegen gesetzter Richtung erstreckt, **dadurch gekennzeichnet, dass** die Wandlernabe (12) über ein Wandlernabenlager (22) in oder an einer getriebegehäusefesten Wand (21, 21 a) des Automatgetriebes (1) radial gelagert ist und eine Pumpenantriebswelle (40) der Ölpumpe (49) abschnittsweise radial umschließt, wobei diese Pumpenantriebswelle (40) radial in dieser Wandlernabe (12) zentriert und auf ihrer dem Antriebsmotor (MOT) zugewandten Seite über ein Mitnahmeprofil (41) mit der Wandlernabe (12) formschlüssig verbunden ist.

2. Pumpenantrieb nach Anspruch 1, **dadurch gekennzeichnet, dass** eine Zentrierung (43) der Pumpenantriebswelle (40) vorgesehen ist, die räumlich gesehen auf der dem Antriebsmotor (MOT) abgewandten Seite des Mitnahmeprofils (41) der Pumpenantriebswelle (40) angeordnet ist.

3. Pumpenantrieb nach Anspruch 1, **dadurch gekennzeichnet, dass** die Pumpenantriebswelle über ihr Mitnahmeprofil radial in der Wandlernabe des Drehmomentwandlers zentriert ist.

4. Pumpenantrieb nach Anspruch 1, **dadurch gekennzeichnet, dass** eine Zentrierung der Pumpenantriebswelle vorgesehen ist, die räumlich gesehen auf der dem Antriebsmotor zugewandten Seite des Mitnahmeprofils der Pumpenantriebswelle angeordnet ist.

5. Pumpenantrieb nach einem der Ansprüche 1 bis 4, **dadurch gekennzeichnet, dass** die Pumpenantriebswelle (40) gegenüber der Wandlernabe (12) mittels eines Dichtrings (42) statisch abgedichtet ist, wobei dieser statisch abdichtende Dichtring (42) in radialer Richtung gesehen zwischen Pumpenantriebswelle (40) und Wandlernabe (12) angeordnet ist und in axialer Richtung gesehen benachbart zum Mitnahmeprofil (41) der Pumpenantriebswelle (40) auf der dem Antriebsmotor (MOT) abgewandten Seite des Mitnahmeprofils (41) angeordnet ist.

6. Pumpenantrieb nach einem der Ansprüche 1 bis 5, **dadurch gekennzeichnet, dass** die Pumpenantriebswelle (40) gegenüber einer getriebegehäusefesten Gehäusenabe (24), die mit einem Leitrad (14) des Drehmomentwandlers (10) formschlüssig verbunden ist, mittels eines Dichtrings (44) rotierend abgedichtet ist, wobei dieser rotierend abdichtende Dichtring (44) in radialer Richtung gesehen zwischen Pumpenantriebswelle (40) und Gehäusenabe (24) angeordnet ist und in axialer Richtung gesehen auf der dem Antriebsmotor (MOT) abgewandten Seite der Pumpenantriebswelle (40) angeordnet ist.

7. Pumpenantrieb nach einem der Ansprüche 1 bis 6, **dadurch gekennzeichnet, dass** die Wandlernabe (12) gegenüber der getriebegehäusefesten Wand (21) mittels eines Dichtrings (23) rotierend abgedichtet ist, wobei dieser rotierend abdichtende Dichtring (23) in radialer Richtung gesehen zwischen Wandlernabe (12) und Innendurchmesser einer Bohrung der getriebegehäusefesten Wand (21) angeordnet ist und in axialer Richtung gesehen auf der dem Antriebsmotor (MOT) zugewandten bzw. auf der dem Mitnahmeprofil (41) der Pumpenantriebswelle (40) zugewandten Seite des Wandlernabenlagers (22) angeordnet ist.

8. Pumpenantrieb nach einem der Ansprüche 1 bis 7, **dadurch gekennzeichnet, dass** die Ölpumpe (49) nicht koaxial zum Drehmomentwandler (10) angeordnet ist und über einen Kettentrieb oder einen Stirntrieb oder einen Kegeltrieb mit dem Pumpenrad (11) des Drehmomentwandlers (10) verbunden ist, wobei die Pumpenantriebswelle (40) mit einem angetriebenen Kettenrad (45) dieses Kettentriebs bzw. einem angetriebenem Stirnrad dieses Stirntriebs bzw. einem angetriebenem Kegelrad dieses Kegeltriebs verbunden ist, und wobei ein über eine Kette (46) getriebenes Kettenrad (47) dieses Kettentriebs bzw. ein getriebenes Stirnrad dieses Stirntriebs bzw. ein getriebenes Kegelrad dieses Kegeltriebs mit einer Pumpeneingangswelle (48) oder einem Pumpenrad der Ölpumpe (49) verbunden ist.

9. Pumpenantrieb nach Anspruch 8, **dadurch gekennzeichnet, dass** die Pumpenantriebswelle (40) und das angetriebene Kettenrad (45) bzw. angetriebene Stirnrad bzw. angetriebene Kegelrad einstückig ausgeführt sind.

10. Pumpenantrieb nach einem der Ansprüche 1 bis 7, **dadurch gekennzeichnet, dass** die Ölpumpe koaxial zum Drehmomentwandler angeordnet ist, wobei die Pumpenantriebswelle mit einem Pumpenrad der Ölpumpe verbunden ist.

11. Pumpenantrieb nach Anspruch 10, **dadurch gekennzeichnet, dass** die Pumpenantriebswelle und das Pumpenrad der Ölpumpe einstückig ausgeführt sind.

## Claims

1. Pump drive of an automatic transmission (1) with a hydrodynamic torque converter (10) driven by an engine (MOT) and with an oil pump (49) driven by a pump impeller (11) of the torque converter (10), the pump impeller (11) of the torque converter (10) being connected to a converter hub (12) which extends from the pump impeller (11) of the torque converter (10) in a direction opposite to the engine (MOT), **characterized in that** the converter hub (12) is mounted radially via a converter-hub bearing (22) in or on a gearcase-fixed wall (21, 21a) of the automatic transmission (1) and, in portions, radially surrounds a pump driveshaft (40) of the oil pump (49), this pump driveshaft (40) being centred radially in this converter hub (12) and, on its side facing the engine (MOT), being connected positively to the converter hub (12) via a catch profile (41).

2. Pump drive according to Claim 1, **characterized in that** a centring (43) of the pump driveshaft (40) is provided, which, as seen spatially, is arranged on that side of the catch profile (41) of the pump driveshaft (40) which faces away from the engine (MOT).

3. Pump drive according to Claim 1, **characterized in that** the pump driveshaft is centred radially via its catch profile in the converter hub of the torque converter.

4. Pump drive according to Claim 1, **characterized in that** a centring of the pump driveshaft is provided, which, as seen spatially, is arranged on that side of the catch profile of the pump driveshaft which faces the engine.

5. Pump drive according to one of Claims 1 to 4, **characterized in that** the pump driveshaft (40) is sealed off statically with respect to the converter hub (12) by means of a sealing ring (42), this statically sealing-off sealing ring (42) being arranged, as seen in the radial direction, between the pump driveshaft (40) and converter hub (12), and being arranged, as seen in the axial direction, adjacently to the catch profile (41) of the pump driveshaft (40) on that side of the catch profile (41) which faces away from the engine (MOT).

6. Pump drive according to one of Claims 1 to 5, **characterized in that** the pump driveshaft (40) is sealed off rotationally with respect to a gearcase-fixed case hub (24), connected positively to a guide wheel (14) of the torque converter (10), by means of a sealing ring (44), this rotationally sealing-off sealing ring (44) being arranged, as seen in the radial direction, between the pump driveshaft (40) and case hub (24), and being arranged, as seen in the axial direction, on that side of the pump driveshaft (40) which faces away from the engine (MOT).

7. Pump drive according to one of Claims 1 to 6, **characterized in that** the converter hub (12) is rotationally sealed off with respect to the gearcase-fixed wall (21) by means of a sealing ring (23), this rotationally sealing-off sealing ring (23) being arranged, as seen in the radial direction, between the converter hub (12) and the inside diameter of a bore of the gearcase-fixed wall (21), and being arranged, as seen in the axial direction, on that side of the converter-hub bearing (22) which faces the engine (MOT) or on that side of the converter-hub bearing (22) which faces the catch profile (41) of the pump driveshaft (40).

8. Pump drive according to one of Claims 1 to 7, **characterized in that** the oil pump (49) is not arranged coaxially with respect to the torque converter (10) and is connected to the pump impeller (11) of the torque converter (10) via a chain mechanism or a spur mechanism or a bevel mechanism, the pump driveshaft (40) being connected to a driven chain wheel (45) of this chain mechanism or to a driven spur wheel of this spur mechanism or to a driven bevel wheel of this bevel mechanism, and a chain wheel (47), driven via a chain (46), of this chain mechanism or a driven spur wheel of this spur mechanism or a driven bevel wheel of this bevel mechanism being connected to a pump input shaft (48) or a pump impeller of the oil pump (49).

9. Pump drive according to Claim 8, **characterized in that** the pump driveshaft (40) and the driven chain wheel (45) or driven spur wheel or driven bevel wheel are produced in one piece.

10. Pump drive according to one of Claims 1 to 7, **characterized in that** the oil pump is arranged coaxially with respect to the torque converter, the pump driveshaft being connected to a pump impeller of the oil pump.

11. Pump drive according to Claim 10, **characterized in that** the pump driveshaft and the pump impeller of the oil pump are produced in one piece.

## Revendications

1. Entraînement de pompe d'une boîte de vitesses automatique (1), comprenant un convertisseur de couple hydrodynamique (10) entraîné par un moteur d'entraînement (MOT) et une pompe à huile (49) entraînée par une roue de pompe (11) du convertisseur de couple (10), la roue de pompe (11) du convertisseur de couple (10) étant connectée à un moyeu de convertisseur (12) qui s'étend depuis la roue de pompe (11) du convertisseur de couple (10) dans la direction opposée au moteur d'entraînement (MOT), **caractérisé en ce que** le moyeu de convertisseur (12) est monté radialement par le biais d'un palier de moyeu de convertisseur (22) dans ou sur une paroi (21, 21a) de la boîte de vitesses automatique (1) fixée au boîtier de la boîte de vitesses, et entoure radialement en partie un arbre d'entraînement de pompe (40) de la pompe à huile (49), cet arbre d'entraînement de pompe (40) étant centré radialement dans ce moyeu de convertisseur (12) et étant connecté par engagement par correspondance géométrique au moyeu de convertisseur (12) sur son côté tourné vers le moteur d'entraînement (MOT) par le biais d'un profilé d'entraînement (41).

2. Entraînement de pompe selon la revendication 1, **caractérisé en ce qu'**un centrage (43) de l'arbre d'entraînement de pompe (40) est prévu, lequel est disposé, vu dans l'espace, du côté du profilé d'entraînement (41) de l'arbre d'entraînement de pompe (40) opposé au moteur d'entraînement (MOT).

3. Entraînement de pompe selon la revendication 1, **caractérisé en ce que** l'arbre d'entraînement de pompe est centré par le biais de son profilé d'entraînement radialement dans le moyeu de convertisseur du convertisseur de couple.

4. Entraînement de pompe selon la revendication 1, **caractérisé en ce qu'**un centrage de l'arbre d'entraînement de pompe est prévu, lequel est disposé, vu dans l'espace, du côté du profilé d'entraînement de l'arbre d'entraînement de pompe tourné vers le moteur d'entraînement.

5. Entraînement de pompe selon l'une quelconque des revendications 1 à 4, **caractérisé en ce que** l'arbre d'entraînement de pompe (40) est rendu étanche statiquement vis-à-vis du moyeu de convertisseur (12) au moyen d'une bague d'étanchéité (42), cette bague d'étanchéité (42) réalisant l'étanchéité statiquement étant disposée, vue dans la direction radiale, entre l'arbre d'entraînement de pompe (40) et le moyeu de convertisseur (12) et étant disposée, vue en direction axiale, à côté du profilé d'entraînement (41) de l'arbre d'entraînement de pompe (40) du côté du profilé d'entraînement (41) opposé au moteur d'entraînement (MOT).

6. Entraînement de pompe selon l'une quelconque des revendications 1 à 5, **caractérisé en ce que** l'arbre d'entraînement de pompe (40) est rendu étanche en rotation au moyen d'une bague d'étanchéité (44) vis-à-vis d'un moyeu de boîtier (24) fixé au boîtier de la boîte de vitesses, qui est connecté par engagement par correspondance géométrique à un stator (14) du convertisseur de couple (10), cette bague d'étanchéité (44) réalisant l'étanchéité en rotation étant disposée, vue dans la direction radiale, entre l'arbre d'entraînement de la pompe (40) et le moyeu du boîtier (24), et vue dans la direction axiale, étant disposée du côté de l'arbre d'entraînement de pompe (40) opposé au moteur d'entraînement (MOT).

7. Entraînement de pompe selon l'une quelconque des revendications 1 à 6, **caractérisé en ce que** le moyeu de convertisseur (12) est rendu étanche en rotation au moyen d'une bague d'étanchéité (23) vis-à-vis de la paroi (21) fixée au boîtier de la boîte de vitesses, cette bague d'étanchéité (23) réalisant l'étanchéité en rotation étant disposée, vue dans la direction radiale, entre le moyeu du convertisseur (12) et le diamètre intérieur d'un alésage de la paroi (21) fixée au boîtier de la boîte de vitesses, et vue dans la direction axiale, étant disposée du côté du palier du moyeu de convertisseur (22) tourné vers le moteur d'entraînement (MOT) ou du côté tourné vers le profilé d'entraînement (41) de l'arbre d'entraînement de pompe (40).

8. Entraînement de pompe selon l'une quelconque des revendications 1 à 7, **caractérisé en ce que** la pompe à huile (49) n'est pas disposée coaxialement au convertisseur de couple (10) et est connectée par le biais d'un mécanisme d'entraînement à chaîne ou d'un mécanisme à pignon droit ou d'un mécanisme à pignon conique à la roue de pompe (11) du convertisseur de couple (10), l'arbre d'entraînement de pompe (40) étant connecté à une roue dentée (45) entraînée de ce mécanisme d'entraînement à chaîne ou à un pignon droit entraîné de ce mécanisme à pignon droit ou d'un pignon conique entraîné de ce mécanisme à pignon conique, et une roue dentée (47) entraînée par une chaîne (46) de ce mécanisme d'entraînement à chaîne ou un pignon droit entraîné de ce mécanisme à pignon droit ou un pignon conique entraîné de ce mécanisme à pignon conique étant connecté à un arbre d'entraînement de pompe (48) ou à une roue de pompe de la pompe à huile (49).

9. Entraînement de pompe selon la revendication 8, **caractérisé en ce que** l'arbre d'entraînement de pompe (40) et la roue dentée entraînée (45) ou le pignon droit entraîné ou le pignon conique entraîné sont réalisés d'une seule pièce.

10. Entraînement de pompe selon l'une quelconque des revendications 1 à 7, **caractérisé en ce que** la pompe à huile est disposée coaxialement au convertisseur de couple, l'arbre d'entraînement de pompe étant connecté à une roue de pompe de la pompe à huile.

11. Entraînement de pompe selon la revendication 10, **caractérisé en ce que** l'arbre d'entraînement de pompe et la roue de pompe de la pompe à huile sont réalisés d'une seule pièce.
